# FASCICULE DE BREVET EUROPEEN

(11) **EP 1 640 203 B1**
(45) Date de publication et mention de la délivrance du brevet: **17.03.2010**
(21) Numéro de dépôt: 05291963.6
(22) Date de dépôt: 22.09.2005
(51) Int. Cl.: B60K 20/00

(54) **Système de contrôle du fonctionnement de moyens de motorisation hybride d'un véhicule automobile**
System zur Steuerung eines Hybridfahrzeugs
Control device of the propulsion system of a hybrid vehicle

(30) Priorité: 23.09.2004 FR 0410076
(43) Date de publication de la demande: 29.03.2006
(73) Titulaire: Peugeot Citroën Automobiles SA, 78140 Vélizy-Villacoublay (FR)
(72) Inventeur: Cluzel, Eric, 78550 Gressey (FR)

(56) Documents cités:
- WO-A-2004/045883
- US-A1- 2003 010 548
- US-B1- 6 365 983
- US-B1- 6 428 444

## Description

La présente invention concerne un système de contrôle du fonctionnement de moyens de motorisation hybride d'un véhicule automobile.

De tels moyens de motorisation hybride comporte généralement au moins un moteur thermique associé à des moyens de commande de son démarrage, des moyens formant moto-générateur électrique associés à des moyens de stockage d'énergie électrique et une boite de vitesse mécanique pilotée.

On a déjà développé dans l'état de la technique différentes structures de moyens de motorisation hybride de ce type.

Ainsi par exemple, on connaît dans l'état de la technique, des architectures dites à un arbre ou à deux arbres.

Dans une architecture à un arbre, le moto-générateur et le moteur thermique sont accouplés au même arbre et un embrayage piloté est associé au moteur thermique.

Dans une architecture à deux arbres, le moteur thermique et le moto-générateur sont couplés en parallèle et le moteur thermique est également associé à un embrayage piloté.

Mais ces moyens de motorisation présentent un certain nombre d'inconvénients, notamment au niveau des à-coups de couple sur les roues motrices du véhicule lors d'un changement d'état de ceux-ci, ce changement d'état pouvant résulter d'un passage de rapport de la boite de vitesse ou d'un démarrage du moteur thermique.

On sait en effet, que le démarrage du moteur thermique réalisé par exemple à travers l'embrayage piloté, par le moteur électrique, entraîne des variations de couple aux roues motrices plus ou moins désagréables pour les utilisateurs du véhicule.

Une tentative pour résoudre ces problèmes a déjà été décrite dans le document US 2003/0010548 qui décrit un système conforme au préambule de la revendication 1.

Le but de l'invention est de perfectionner encore ce système.

A cet effet, l'invention a pour objet un système de contrôle du fonctionnement de moyens de motorisation hybride d'un véhicule automobile, comportant au moins un moteur thermique associé à des moyens de commande de son démarrage, des moyens formant moto-générateur électrique associée à des moyens de stockage d'énergie électrique et une boite de vitesse mécanique pilotée et comportant en outre des moyens de synchronisation du démarrage du moteur thermique et d'un changement de rapport de la boite de vitesse, pour éviter les à-coups de couple sur les roues motrices du véhicule, la boite de vitesse présentant un mode de fonctionnement automatique géré par une unité de contrôle des changements de rapport de celle-ci, et les moyens de synchronisation comprenant des moyens de pilotage de l'unité de contrôle de la boite et/ou des moyens de commande du démarrage du moteur pour déclencher un changement de rapport de la boite synchronisé avec le démarrage du moteur thermique, **caractérisé en ce que** les moyens de synchronisation comprennent des moyens de détection d'une requête de changement de rapport de la boite et sont adaptés pour modifier temporairement au moins un paramètre de contrôle des moyens de démarrage du moteur, afin de démarrer le moteur lors du changement de rapport.

Selon d'autres aspects de l'invention, le système de contrôle comprend l'une ou plusieurs des caractéristiques suivantes :
- les moyens de synchronisation comprennent en outre des moyens de détection d'une requête de démarrage du moteur et sont adaptés pour modifier temporairement les paramètres de déclenchement d'un changement de rapport de l'unité de contrôle de la boite, afin de déclencher le changement de rapport lors du démarrage du moteur,
- les paramètres modifiés sont les lois de passage des rapports,
- la boite de vitesse présente un mode de fonctionnement manuel géré par le conducteur du véhicule, et en ce que les moyens de synchronisation comprennent des moyens de détection d'une commande manuelle de passage de rapport de la boite pour déclencher le démarrage du moteur, synchronisé avec le passage du rapport,
- les moyens de synchronisation sont adaptés pour modifier temporairement au moins un paramètre de contrôle des moyens de commande du démarrage du moteur,
- le paramètre modifié est une valeur de seuil limite de couple sur les roues motrices du véhicule, de commande du démarrage du moteur,
- la valeur de seuil est réduite de 100 Nm, et
- les moyens de commande du démarrage du moteur comprennent un embrayage piloté.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant un exemple de réalisation des moyens de motorisation hybride d'un véhicule automobile à un arbre ;
- la Fig.2 illustre des courbes de démarrage et d'extinction d'un moteur thermique entrant dans la constitution de tels moyens de motorisation ;
- les Figs.3 et 4 illustrent des modifications de lois de passage de rapports mises en oeuvre dans un système selon l'invention ; et
- la Fig.5 illustre la modification d'un paramètre de contrôle des moyens de commande du démarrage du moteur mise en oeuvre dans un système de contrôle selon l'invention.

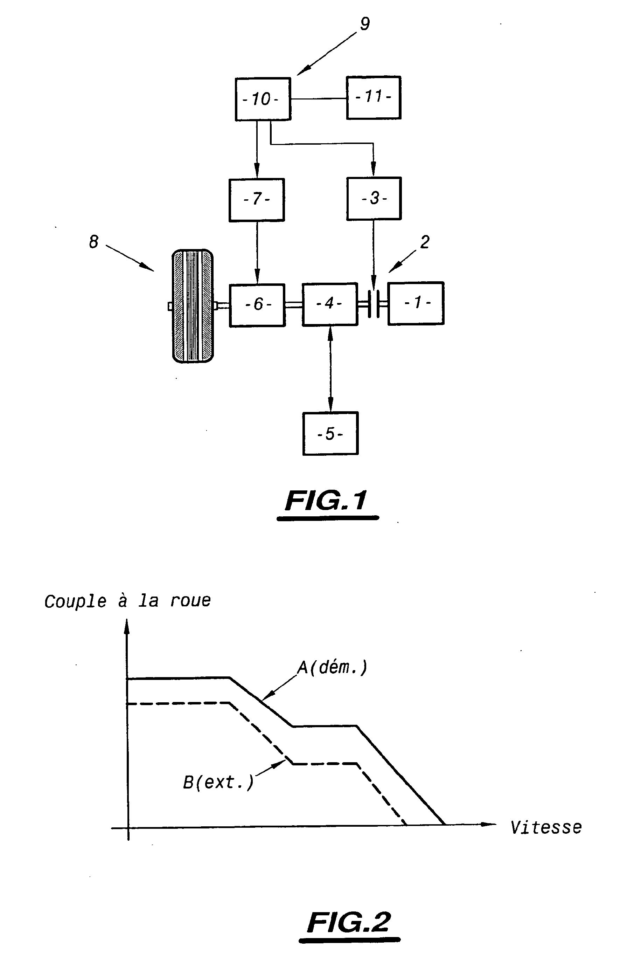

On a en effet illustré sur la figure 1, un système de contrôle du fonctionnement des moyens de motorisation hybride d'un véhicule automobile, comportant un moteur thermique désigné par la référence générale 1, associé à des moyens de commande de son démarrage désignés par la référence générale 2, ces moyens de commande comprenant par exemple un embrayage piloté dont le fonctionnement est piloté par une unité de commande désignée par la référence générale 3.

Ces moyens de motorisation comprennent également des moyens formant moto-générateur électrique désignés par la référence générale 4 pouvant selon les conditions, fonctionner en moteur électrique ou en génératrice, de façon classique.

Ces moyens formant moto-générateur électrique sont associés à des moyens de stockage d'énergie électrique désignés par la référence générale 5 sur cette figure, constitués par exemple par une batterie.

Enfin, les moyens de motorisation comprennent également une boite de vitesse mécanique pilotée désignée par la référence générale 6, cette boite de vitesse présentant un mode de fonctionnement automatique géré par une unité de contrôle 7 de changement de rapport de celle-ci, et un mode de fonctionnement manuel géré par le conducteur du véhicule, comme cela sera décrit plus en détail par la suite.

L'arbre de sortie de cette boite de vitesse 6 est associé aux roues motrices comme par exemple celle désignée par la référence générale 8 sur cette figure, du véhicule.

Selon l'invention, un tel système comporte en outre des moyens de synchronisation du démarrage du moteur thermique et d'un changement de rapport de la boite de vitesse, pour éviter les à-coups de couple sur les roues motrices du véhicule.

Ces moyens sont désignés par la référence générale 9 sur cette figure et comprennent par exemple un calculateur de synchronisation désigné par la référence générale 10, associé à des moyens de stockage de données désignés par la référence générale 11.

On sait en effet que dans un tel véhicule, le démarrage et l'extinction du moteur thermique sont assurés comme cela est illustré sur la figure 2, selon que le point de fonctionnement des moyens de motorisation franchit une limite de démarrage du moteur thermique illustrée par la courbe A sur cette figure 2, ou une limite d'extinction du moteur thermique illustrée par la courbe B sur cette figure 2.

Or, et comme cela a été indiqué précédemment, un tel démarrage du moteur thermique produit des variations de couple importantes sur les roues motrices.

Pour résoudre ces problèmes, on propose donc d'utiliser des moyens de synchronisation du démarrage du moteur thermique et d'un changement de rapport de la boite de vitesse.

Comme cela a été indiqué précédemment, la boite de vitesse présente un mode de fonctionnement automatique géré par l'unité de contrôle 7 des changements de rapport de celle-ci.

Les moyens de synchronisation 9 peuvent alors comprendre des moyens de pilotage de l'unité de contrôle de la boite et/ou des moyens de commande du démarrage du moteur pour déclencher un changement de rapport de la boite synchronisé avec le démarrage du moteur.

Ainsi, ces moyens de synchronisation 9 peuvent comprendre des moyens de détection d'une requête de démarrage du moteur, et sont alors adaptés pour modifier temporairement les paramètres de déclenchement d'un changement de rapport de l'unité de contrôle de la boite désignée par la référence générale 7, afin de déclencher le changement de rapport lors du démarrage du moteur.

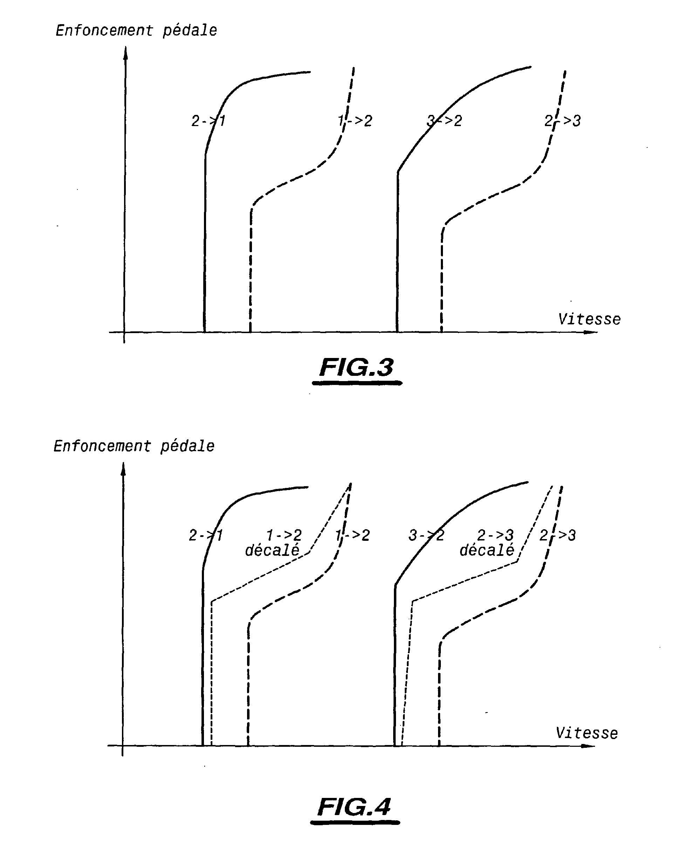

Ceci est illustré sur les figures 3 et 4, où l'on peut constater que les paramètres modifiés sont en fait les lois de passage des rapports.

En effet, dans ce cas de fonctionnement, lorsque les moyens de synchronisation 9 détectent une requête de démarrage du moteur, ils modifient comme cela est illustré sur les figures 3 et 4, les lois de passage des rapports de la boite de vitesse, par exemple en les abaissant, pour provoquer un changement de rapport de la boite de vitesse, synchronisé avec la commande de démarrage du moteur du véhicule, afin de limiter la perception des à-coups de couple sur les roues motrices par les utilisateurs du véhicule.

On conçoit alors que l'on modifie temporairement les lois de passage des rapports de la boite pendant le démarrage du moteur thermique, ce qui permet d'anticiper un passage de rapport qui aurait lieu juste après le démarrage du moteur thermique afin de synchroniser les deux phénomènes.

Une fois le moteur thermique démarré, les lois de passage reprennent alors leurs valeurs nominales. Cette modification temporaire peut par exemple présenter une durée de 200 millisecondes.

Par ailleurs, les moyens de synchronisation 9 peuvent également être adaptés pour détecter une requête de changement de rapport de la boite de vitesse, et sont alors adaptés pour modifier temporairement au moins un paramètre de contrôle des moyens de démarrage du moteur, afin de démarrer le moteur lors de ce changement de rapport.

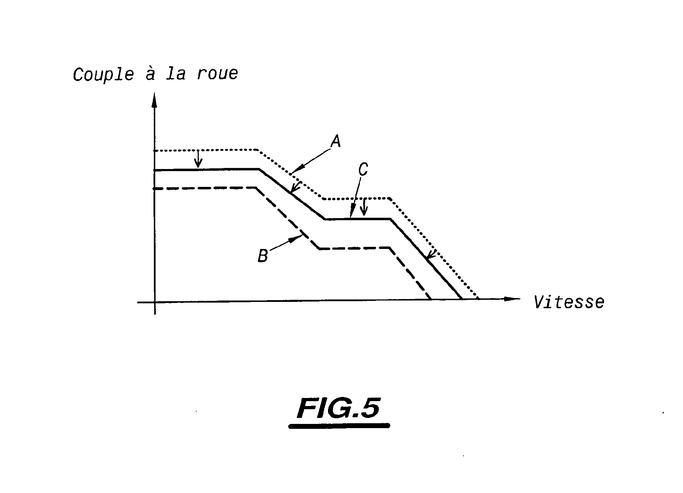

Ceci est illustré sur la figure 5, où l'on voit que dans ce cas, les moyens de synchronisation 9 sont adaptés pour modifier temporairement au moins un paramètre de contrôle des moyens de commande du démarrage du moteur, ce paramètre modifié pouvant être une valeur de seuil limite de couple sur les roues motrices du véhicule, de commande du démarrage du moteur.

Cette valeur de seuil peut en effet être réduite de 100 Nm, ce qui permet de synchroniser un démarrage du moteur avec un changement de rapport.

Ainsi par exemple, la courbe modifiée de démarrage du moteur thermique est la courbe C.

Un tel fonctionnement peut également être mis en oeuvre dans le cas où la boite de vitesse présente un mode de fonctionnement manuel géré par le conducteur du véhicule, et que les moyens de synchronisation 9 comprennent des moyens de détection d'une commande manuelle de passage de rapport de la boite pour déclencher le démarrage du moteur, synchronisé avec le passage du rapport.

On conçoit alors que dans le système de contrôle selon l'invention, on synchronise les changements de rapport et le démarrage du moteur thermique pour éviter les à-coups de couple sur les roues motrices du véhicule.

Dans le cas où la boite de vitesse est en mode de changement de rapport automatique, les moyens de synchronisation détectent une requête de changement de rapport et synchronisent avec ce changement de rapport le démarrage du moteur thermique ou détectent une requête de démarrage du moteur thermique et synchronisent avec ce démarrage, un changement de rapport.

En mode de fonctionnement manuel, ils détectent une commande manuelle de passage de rapport pour provoquer le démarrage du moteur thermique.

Ceci est fait en modifiant les paramètres de déclenchement soit du changement de rapport, soit de démarrage du moteur thermique de façon temporaire, afin d'anticiper ces phénomènes.

Il va de soi bien entendu que d'autres modes de réalisation encore peuvent être envisagés.

Ainsi par exemple, une structure de moyens de motorisation à deux arbres peut également être envisagée.

## Revendications

1. Système de contrôle du fonctionnement de moyens de motorisation hybride d'un véhicule automobile, comportant au moins un moteur thermique (1) associé à des moyens de commande (2,3) de son démarrage, des moyens formant moto-générateur électrique (4) associée à des moyens de stockage d'énergie électrique (5) et une boite de vitesse mécanique pilotée (6), et comportant en outre des moyens de synchronisation (9) du démarrage du moteur thermique et d'un changement de rapport de la boite de vitesse, pour éviter les à-coups de couple sur les roues motrices (8) du véhicule, la boite de vitesse (6) présentant un mode de fonctionnement automatique géré par une unité de contrôle (7) des changements de rapport de celle-ci, et les moyens de synchronisation (9) comprenant des moyens (10) de pilotage de l'unité de contrôle (7) de la boite (6) et/ou des moyens de commande (2,3) du démarrage du moteur (1) pour déclencher un changement de rapport de la boite synchronisé avec le démarrage du moteur thermique, **caractérisé en ce que** les moyens de synchronisation comprennent des moyens de détection d'une requête de changement de rapport de la boite et sont adaptés pour modifier temporairement au moins un paramètre de contrôle des moyens de démarrage (2,3) du moteur (1), afin de démarrer le moteur lors du changement de rapport, et **en ce que** les moyens de synchronisation (9) comprennent en outre des moyens de détection d'une requête de démarrage du moteur et sont adaptés pour modifier temporairement les paramètres de déclenchement d'un changement de rapport de l'unité de contrôle (7) de la boite (6), afin de déclencher le changement de rapport lors du démarrage du moteur, les paramètres modifiés étant les lois de passage des rapports.

2. Système selon la revendication précédente, **caractérisé en ce que** la boite de vitesse (6) présente un mode de fonctionnement manuel géré par le conducteur du véhicule, et **en ce que** les moyens de synchronisation (9) comprennent des moyens de détection d'une commande manuelle de passage de rapport de la boite pour déclencher le démarrage du moteur, synchronisé avec le passage du rapport.

3. Système selon la revendication 2, **caractérisé en ce que** les moyens de synchronisation sont adaptés pour modifier temporairement au moins un paramètre de contrôle des moyens de commande du démarrage du moteur.

4. Système selon la revendication 3, **caractérisé en ce que** le paramètre modifié est une valeur de seuil limite de couple sur les roues motrices du véhicule, de commande du démarrage du moteur.

5. Système selon la revendication 4, **caractérisé en ce que** la valeur de seuil est réduite de 100 Nm.

6. Système selon l'une quelconque des revendications précédentes, **caractérisé en ce que** les moyens de commande du démarrage du moteur comprennent un embrayage piloté (2).

## Claims

1. System for controlling the operation of hybrid motorization means of a motor vehicle, comprising at least one heat engine (1) associated with means (2, 3) for commanding it to start, means forming an electric motor-generator (4) associated with means (5) for storing electric energy (5) and a controlled mechanical gearbox (6) and also comprising means (9) for synchronizing the starting of the heat engine and for changing of the gearbox ratio, in order to prevent jolts of torque on the drive wheels (8) of the vehicle, the gearbox (6) having an automatic operating mode managed by a unit (7) for controlling the changes of ratio of the latter, and the synchronization means (9) comprising means (10) for controlling the control unit (7) of the gearbox (6) and/or means (2, 3) for controlling the starting of the engine (1) in order to initiate a change of ratio of the gearbox with the starting of the heat engine, **characterized in that** the synchronization means comprise means for detecting a request for a change of gearbox ratio and are suitable for temporarily modifying at least one control parameter of the means (2, 3) for starting the engine (1), in order to start the engine when there is a change of ratio, and **in that** the synchronization means (9) also comprise means for detecting an engine start request and are suitable for temporarily modifying the parameters for initiating a change of ratio of the unit (7) for controlling the gearbox (6) in order to initiate the change of ratio when the engine starts, the modified parameters being the laws of changing ratio.

2. System according to the preceding claim, **characterized in that** the gearbox (6) has a manual operating mode managed by the driver of the vehicle, an din that the synchronization means (9) comprise means for detecting a manual command to change the ratio of the gearbox in order to initiate the starting of the engine, synchronized with the ratio change.

3. System according to Claim 2, **characterized in that** the synchronization means are suitable for temporarily modifying at least one parameter for controlling the means for controlling the starting of the engine.

4. System according to Claim 3, **characterized in that** the modified parameter is threshold value limiting the torque on the drive wheels of the vehicle, for controlling the starting of the engine.

5. System according to Claim 4, **characterized in that** the threshold value is reduced by 100 Nm.

6. System according to any one of the preceding claims, **characterized in that** the means for controlling the starting of the engine comprise a controlled clutch (2).

## Patentansprüche

1. System zur Überwachung des Betriebs von Hybridantriebseinrichtungen eines Kraftfahrzeugs, die mindestens einen Verbrennungsmotor (1), der Steuereinrichtungen (2, 3) für seinen Start zugeordnet ist, einen elektrischen Motorgenerator (4) bildende Einrichtungen, die Speichereinrichtungen elektrischer Energie (5) zugeordnet sind, und ein gesteuertes mechanisches Schaltgetriebe (6) aufweisen, und außerdem Synchronisierungseinrichtungen (9) des Starts des Verbrennungsmotors und eines Gangwechsels des Schaltgetriebes aufweisen, um die Drehmomentstöße auf die Antriebsräder (8) des Fahrzeugs zu vermeiden, wobei das Schaltgetriebe (6) einen automatischen Betriebsmodus aufweist, der von einer Überwachungseinheit (7) von dessen Gangwechseln verwaltet wird, und die Synchronisierungseinrichtungen (9) Einrichtungen (10) zur Steuerung der Überwachungseinheit (7) des Getriebes (6) und/oder der Steuereinrichtungen (2, 3) des Starts des Motors (1) aufweisen, um einen Gangwechsel des Getriebes synchron mit dem Start des Verbrennungsmotors auszulösen, **dadurch gekennzeichnet, dass** die Synchronisierungseinrichtungen Einrichtungen zur Erfassung einer Gangwechselanforderung des Getriebes enthalten und geeignet sind, um vorübergehend mindestens einen Überwachungsparameter der Starteinrichtungen (2, 3) des Motors (1) zu verändern, um den Motor beim Gangwechsel zu starten, und dass die Synchronisierungseinrichtungen (9) außerdem Einrichtungen zur Erfassung einer Startanforderung des Motors enthalten und geeignet sind, um vorübergehend die Parameter des Auslösens eines Gangwechsels der Überwachungseinheit (7) des Getriebes (6) zu verändern, um den Gangwechsel beim Start des Motors auszulösen, wobei die veränderten Parameter die Gangschaltungsgesetze sind.

2. System nach dem vorhergehenden Anspruch, **dadurch gekennzeichnet, dass** das Schaltgetriebe (6) einen manuellen Betriebsmodus aufweist, der vom Fahrer des Fahrzeugs verwaltet wird, und dass die Synchronisierungseinrichtungen (9) Einrichtungen zur Erfassung einer manuellen Steuerung der Gangschaltung des Getriebes enthalten, um den Start des Motors synchron mit dem Einlegen des Gangs auszulösen.

3. System nach Anspruch 2, **dadurch gekennzeichnet, dass** die Synchronisierungseinrichtungen geeignet sind, um vorübergehend mindestens einen Überwachungsparameter der Steuereinrichtungen des Starts des Motors zu verändern.

4. System nach Anspruch 3, **dadurch gekennzeichnet, dass** der veränderte Parameter ein Grenzschwellwert des Drehmoments auf die Antriebsräder des Fahrzeugs, der Steuerung des Starts des Motors ist.

5. System nach Anspruch 4, **dadurch gekennzeichnet, dass** der Schwellwert um 100 Nm reduziert ist.

6. System nach einem der vorhergehenden Ansprüche, **dadurch gekennzeichnet, dass** die Einrichtungen zum Steuern des Starts des Motors eine gesteuerte Kupplung (2) enthalten.
